# EUROPEAN PATENT SPECIFICATION

(11) **EP 2 908 532 B1**
(45) Date of publication and mention of the grant of the patent: **03.10.2018**
(21) Application number: 15162615.7
(22) Date of filing: 23.12.2011
(51) Int. Cl.: H04N 19/895

(54) **CONCEALMENT OF DATA LOSS FOR VIDEO DECODING**
MASKIERUNG VON DATENVERLUST ZUR VIDEOCODIERUNG
DISSIMULATION DE PERTE DE DONNÉES POUR LE DÉCODAGE VIDÉO

(30) Priority: 30.12.2010 US 201061428645 P
(43) Date of publication of application: 19.08.2015
(62) Divisional of application: 11799454.1
(73) Proprietor: Skype, Dublin 2 (IE)
(72) Inventor: Anderson, Ian, Guildford, Surrey GU2 7XE (GB); Jefremov, Andrei, S-17762 Janfalla (SE); Vafin, Renat, EE-13417 Tallinn (EE); Zhao, David, Redmond, Washington 98052-6399 (US)
(74) Representative: Driver, Virginia Rozanne

(56) References cited:
- WO-A2-2004/008733
- US-A1- 2009 003 461
- BERND GIROD ET AL: "Feedback-Based Error Control for Mobile Video Transmission", PROCEEDINGS OF THE IEEE, IEEE. NEW YORK, US, vol. 87, no. 10, 1 October 1999 (1999-10-01), XP011044278, ISSN: 0018-9219
- YAO WANG ET AL: "Error Control and Concealment for Video Communication: A Review", PROCEEDINGS OF THE IEEE, IEEE. NEW YORK, US, vol. 86, no. 5, 1 May 1998 (1998-05-01), XP011044024, ISSN: 0018-9219

## Description

### Field of the Invention

The present invention relates to the concealment of data loss when decoding a video signal received over a lossy medium such as a packet-switched network.

### Background

The transmission of video over an unreliable channel naturally leads to some frames being lost, or some data within a frame being lost (e.g. certain blocks or macroblocks). For example, the loss could be due to packet-loss if the channel traverses a packet-switched network, or could be due to corruption of data caused by noise or interference.

An encoded video stream typically comprises two types of video frames: key frames and inter-frames. A key frame, also sometimes referred to as an intra-frame, is compressed based on information from within only the current video frame itself (i.e. using intra-frame prediction, similarly to static image coding). An inter-frame on the other hand is compressed using knowledge of a preceding frame within the stream, and allows for much more efficient compression when the scene has relatively few changes because only the differences between frames need to be encoded and transmitted. Inter-frame coding is particularly efficient for a situation such as a talking-head with static background, typical in video conferencing. Depending on the resolution, frame-rate, bit-rate and scene, an intra-frame can be up to 20-100 times larger than an inter-frame. On the other hand, an inter-frame imposes a dependency relation to previous frames. If any of those frames are lost, all subsequent inter-frames will not be properly decoded.

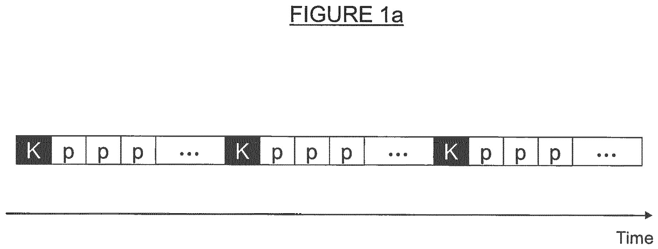

For these reasons, as illustrated schematically in Figure 1a, a typical video stream comprises a lesser number of key frames (K) periodically interleaved between a larger number of inter-frames (p). In case of packet loss, the key-frame K allows recovery of the lost coding state. The key frames allow the receiver to periodically update its decoding state with "absolute" data, not relying on decoding relative to previous frames, and thus avoiding errors that could otherwise propagate due to packet loss.

Other techniques for recovering the decoding state may also be used, e.g. by the decoder or receiver requesting retransmission of the lost data from the encoder or transmitter.

However, in the meantime while the decoder is waiting for the lost state to be recovered, it is desirable for the decoder to be able to continue decoding and playing out some video based on an approximation of the current decoding state.

A simple approach is to freeze the last successfully decoded frame until recovery is possible. However, modern video decoders employ a more sophisticated approach by applying a concealment algorithm. When a portion of image data is lost from a video signal, a typical concealment algorithm works by using preceding and/or adjacent portions of image data to extrapolate or interpolate the lost portion. Interpolation here means generating new, replacement data between received data points; whilst extrapolation means generating new, replacement data extending beyond received data points. Either way, the concealment algorithm is thus able to regenerate an estimate of the lost image data from one or more other received portions of image data.

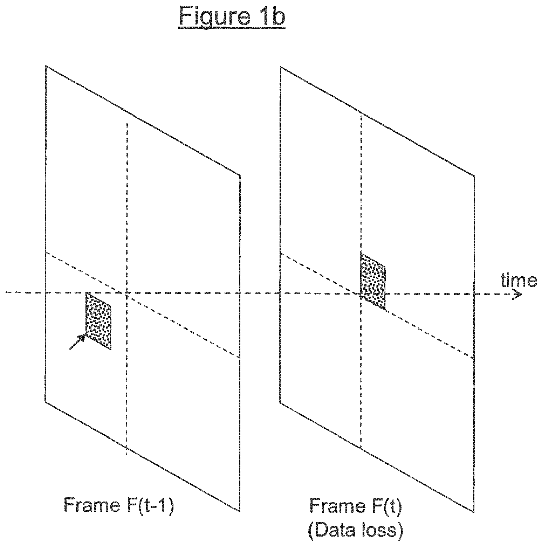

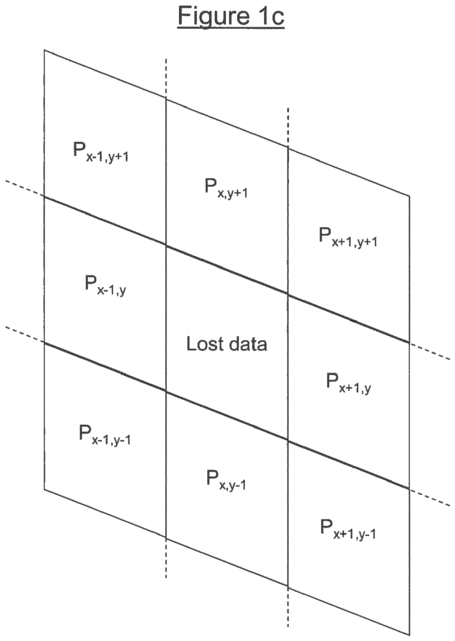

Concealment algorithms may operate on a temporal and/or spatial basis. A temporal concealment algorithm is illustrated schematically in Figure 1b. As illustrated, the concealment algorithm may estimate that a portion of image data can be extrapolated from the parameters of one or more preceding portions of data, e.g. by estimating that a lost frame F(t) will continue to move in a manner extrapolated from the motion vectors of one or more preceding frames F(t-1). A spatial concealment algorithm is illustrated schematically in Figure 1c. In this case, it may be estimated that a portion of image data lost from some location (x,y) within a frame can be interpolated from the parameters of one or more adjacent or nearby portions, e.g. by estimating that a lost macroblock will move in manner interpolated from the motion vectors of adjacent macroblocks. More generally, the lost image data could be interpolated or extrapolated from parameters of any one or more image portions that are suitably nearby in space or time. Spatio-temporal algorithms also exist which combine the two principles. Various examples of concealment algorithms will be familiar to a person skilled in the art.

WO 2004/008733 discloses a method and device for error concealment in a video sequence. When there is a scene transition in the video sequence and there is an error in a picture belonging to the scene transition, an error concealment procedure based on the type of scene transition is used to conceal the error.

### Summary

There is a problem with existing concealment algorithms in that the perceived efficacy of concealment varies greatly depending on the content of the video. However, regardless of perceived efficacy, the algorithm still incurs a significant processing burden in terms of the number of processing cycles required to execute. In fact, the inventors have recognised that in some circumstances it may be preferable to simply freeze a preceding frame or image portion rather than incurring the processing cost of attempting concealment.

The present invention addresses this problem by estimating the efficacy of the concealment process in the event of one or more particular frames or portions of image data being lost. After the loss event (or events), this estimate is then used to make a decision about whether a particular frame or image portion should be decoded using concealment or whether the decoding process should instead be frozen, e.g. until recovery is possible.

According to one aspect of the present invention, there is provided a system comprising: a receiver for receiving from an encoder a video signal comprising encoded video data and a transport protocol over a lossy medium; and a decoder coupled to the receiver and arranged to decode the video signal for output to a display, the decoder including a concealment module for regenerating a portion of image data lost from the video signal over said medium, by interpolating or extrapolating from other image data of the video signal received over said medium; wherein the decoder comprises a controller configured to operate in one of a first mode and a second mode and select, based on a measure of loss effect estimated for said portion of image data, whether (i) to operate in the first mode whereby the concealment module is applied to regenerate said portion of image data, or alternatively (ii) to operate in the second mode; characterized in that: in the second mode, the controller freezes preceding image data of the video signal in place of said portion of image data; and the decoder is configured to receive the measure of loss effect from the encoder, and to use the measure of loss effect received from the encoder to make said selection.

In embodiments the system may comprise an encoder arranged to encode the video signal; a transmitter arranged to transmit the video signal to the receiver over said medium; and an encoder-side estimation module configured to estimate said measure of loss effect based on knowledge of said portion of image data before transmission and loss over said medium; the encoder being configured to signal the loss effect to the decoder for use by the controller in making said selection.
The encoder may be configured to determine, based on the measure of loss effect, a concealment decision as to whether to apply the concealment module, and to signal the concealment decision to the decoder for use by the controller in making said selection.

The encoder-side estimation module may be configured to estimate the measure of loss effect based on an unencoded version of said portion of image data.

The encoder-side estimation module may comprise a parallel instance of the decoder, and may be configured to estimate said measure of loss effect by comparing an unencoded version of said portion of image data with a simulated regeneration of said portion of image data by an instance of the concealment module.

In embodiments, the decoder may be configured to instigate a recovery operation, and to apply the selected one of the concealment or freezing during recovery.

In one application of the invention, said lossy medium may comprise a packet-switched network.

According to another aspect of the present invention, there is provided a method comprising: receiving from an encoder a video signal comprising encoded video data and a transport protocol over a lossy medium; using a decoder to decode the video signal for output to a display, the decoder including a concealment module for regenerating a portion of image data lost from the video signal over said medium, by interpolating or extrapolating from other image data of the video signal received over said medium; wherein the decoding comprises operating in one of a first mode and second mode, and selecting, based on a measure of loss effect estimated for said portion of image data, whether (i) to operate in the first mode whereby the concealment module is applied to regenerate said portion of image data, or alternatively (ii) to operate in the second mode; the method characterised in that: the second mode comprises freezing preceding image data of the video signal in place of said portion of image data; and the decoder receives the measure of loss effect from the encoder, and uses the measure of loss effect received from the encoder to make said selection.

According to another aspect of the present invention, there may be provided computer program product comprising code embodied on a non-transient computer-readable medium and configured so as when executed on a processing apparatus to perform operations in accordance with any of the above system or method features.

### Brief Description of the Drawings

For a better understanding of the present invention and to show how it may be put into effect, reference is made by way of example to the accompanying drawings in which:
Figure 1a is a schematic illustration of a stream of encoded video,
Figure 1b is a schematic illustration of a temporal concealment algorithm,
Figure 1c is a schematic illustration of a spatial concealment algorithm,
Figure 2a is a schematic block diagram of a decoder-side apparatus,
Figure 2b is a schematic block diagram of an encoder-side apparatus, and
Figure 2c is a schematic block diagram of an encoder.

### Detailed Description of Preferred Embodiments

As discussed, current systems may employ one of two techniques.
(i) Decode all frames, including by using a concealment algorithm in event of loss. After loss initialize recovery and rely on the concealment during the recovery time.
(ii) Do not decode after a loss event. Instead after a loss event initiate recovery and freeze the last good frame on the screen

(Recovery may for example comprise the receiver requesting a lost packet or frame from the transmitter, or simply waiting for the next key frame.)

The first technique (i) can improve the perceived quality of the video in certain situations, but also incurs a high processing burden and is not always effective. The second technique (ii) incurs relatively little processing cost but is unlikely to go unnoticed by the viewer. On the other hand, in situations where the first technique (i) is ineffective, the second technique (ii) may appear no worse from the perspective of the viewer, or may even appear better.

In the following embodiments, the present invention achieves the benefit of both techniques by estimating a loss effect that will be experienced if a portion of data is lost and regenerated by concealment, and then using that estimate to switch between concealment and simple freezing. This advantageously presents fluid motion to the viewer using concealment when possible, yet freezes the video when it is estimated that the degree of decoding errors on screen would actually be perceived as a worse compared to just freezing the last good frame.

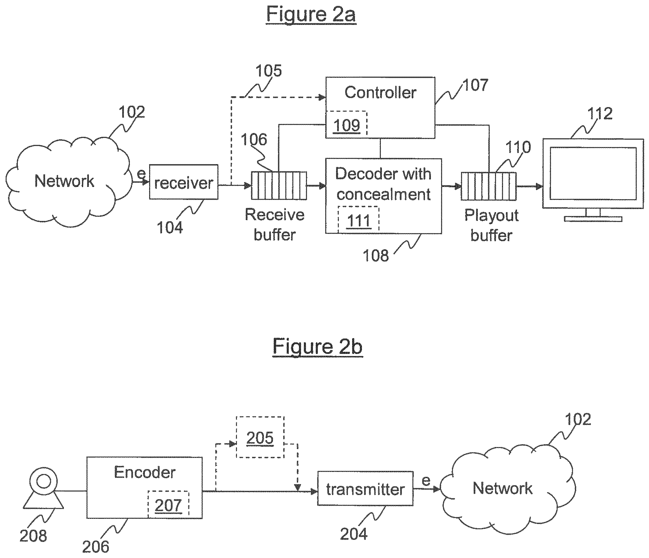

The estimate of loss effect for a particular portion of image data is a measure of the effect that the loss of that portion will have on the viewer's perception if the video signal is decoded through a decoder employing a concealment algorithm. As will be discussed in more detail below, the inventors have developed a variety of different options that can be used to estimate the loss effect, either at the encoder side or decoder side of the system. These will be described shortly, but first an exemplary architecture for a decoder-side apparatus and encoder-side apparatus is described with reference to Figures 2a and 2b.

As shown in Figure 2a, the decoder side apparatus comprises a receiver 104 arranged to receive encoded video signals (e) over a lossy transmission medium 102 such as a packet-switched network, susceptible to losses such as packet-loss or corruption of data (to a degree not correctable by error correction codes or such like). For example the receiver 104 may comprise a wired or wireless modem. The encoded video signals comprises both the compressed video data, and a surrounding protocol containing meta-information, such as timing, framing, and information enabling losses to be identified. One example is the Real-Time Transport Protocol (RTP), but other suitable protocols will also be familiar to those skilled in the art.

The output of the receiver 104 is coupled to the input of a receive buffer 106 (sometimes referred to as the jitter buffer) for buffering blocks or macroblocks of one or more frames of the video signal. The output of this receive buffer 106 is then coupled to the input of a decoder 108, arranged to decode the video signal. The decoder may for example be implemented in accordance with ISO standard H.264 or others. The decoder 108 comprises a decoding module in the form of a decoding algorithm, which is arranged to regenerate lost data during the decoding process as described above. The output of the decoder 108 is in turn coupled to the input of a playout buffer 110 to buffer the frames for playout. Finally, the output of the payout buffer 110 is coupled to the input of a display screen 112 for displaying the decoded video.

The encoder-side apparatus is shown in Figure 2b. Here, the output of a video camera 208 such as a webcam is coupled to the input of an encoder 206, which encodes video signals received from the camera 208. By way of example, the encoder may be implemented in accordance with ISO standard H.264. The output of the decoder 206 is coupled to the input of a transmitter 204 such as a wired or wireless modem in order to transmit the encoded video signal (e) to the receiver 104 over the packet-switched network 102

Returning to Figure 2a, the receive-side apparatus also comprises a controller 107 coupled to the receive buffer 106 and decoder 108, arranged so as to access information about the contents of the receive buffer 106, and thereby determine whether data has been lost in transmission and if so to apply the concealment algorithm as appropriate. For example, protocols such as RTP may include packet sequence numbers to allow detection of lost packets, and/or redundant data allowing detection of errors. Upon detecting packet loss or an incorrigible error, the controller 106 can apply a concealment algorithm.

In accordance with embodiments of the present invention, the controller 107 is also configured to select, based on a measure of loss effect, whether (i) to operate in a first mode whereby it applies the concealment algorithm in order to attempt to regenerate the lost data, or instead whether (ii) to operate in an alternative second mode in which it simply freezes the preceding frame until a recovery is possible. That is to say, the invention does not just detect whether or not there is a loss, but also determines some information about the extent to which that loss will be perceived, and based on that determination the controller 107 selects the best way in which to mitigate the loss.

There are several places in the transmit and/or receiver chain where the module for estimating the loss effect can be implemented, represented by components 105, 109, 111, 205, and/or 207 in Figures 2a and 2b.

The most effective place to locate an estimation module is at the encoder 206, shown by component 207 in Figure 2b, because the encoder 206 has access to both the original video from the camera 208 and all the internal states of the decoder. Several techniques can be used independently or in combination, as follows.

One such technique is achieved by running a parallel instance of the decoder within the encoder 206 (including a parallel instance of the concealment algorithm). This parallel instance can be used to simulate the loss of a particular one or more frames or slices of frames. The encoder-side estimation module 207 then computes the loss effect by comparing the simulated result with the original unencoded data, thereby measuring the loss effect in terms of a difference value (e.g. based on MSE, PSNR or other error measure). The greater the difference, the less effective would concealment be if that frame or slice was lost. The encoder 206 may signal this difference value to the controller 107 on the receive side, e.g. being transmitted in the video stream in the form of side information, which may be considered an additional part of the meta-information of the encoded video. Note that the encoder 206 may be configured to ensure that the side information indicating the loss effect is transmitted in a different packet of the network layer protocol than the frame, block or portion of vide data to which it relates, so that if packet loss is encountered over the network then the required indication regarding the estimated loss effect is not itself lost and therefore rendered pointless. However, in an embodiment intended only to deal with corruption of some of the data within a packet, or indeed in the case of a non-packet-based medium, then this is not absolutely required.

Having received the relevant side information in event of loss, the controller 107 may then select to apply the concealment algorithm on condition that the difference is below a certain threshold. Alternatively (and more preferably from a point of view of signalling overhead), the encoder-side estimation module 207 may decide whether the difference value is above or below a threshold and signal only the decision to the controller 107 as side information. Line 105 between the received video stream and the controller 107 is shown in Figure 2a to show the signalling of side information.

This technique gives the most precise estimate of the loss effect. The history of loss can be from 1 frame to N and any possible loss pattern can be evaluated. The only limit here would be the computational power available and amount of memory.

In a particularly preferred embodiment multiple instances of the decoder may be run in parallel at the encoding side, so that the estimation of effect of different or multiple losses can be calculated in parallel, e.g. where multiple processors or processor cores are available.

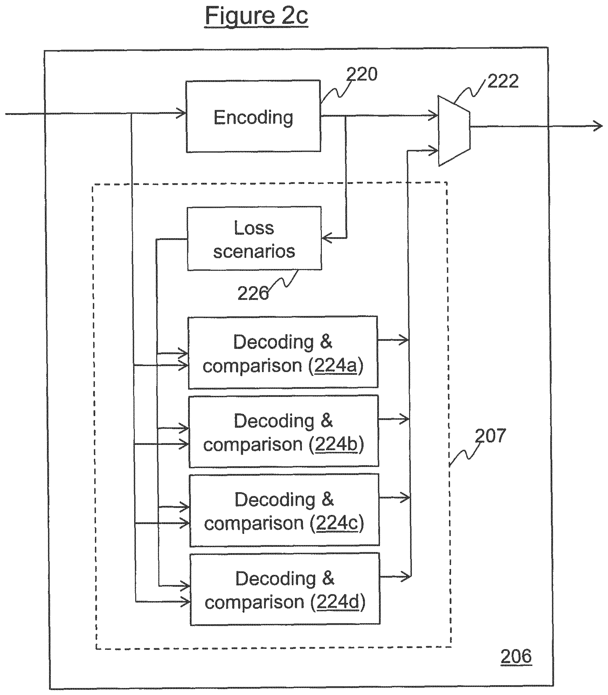

This idea is illustrated schematically in Figure 2c, in which the encoder 206 comprises an encoding block 220 and two or more duplicate instances 224 of the decoder. The encoding block 220 has an input arranged to receive the unencoded video stream and is configured to compress the video using conventional techniques such as inter or intra prediction coding. An output of the encoding block 220 is then coupled to an input of a loss simulator 226, which has outputs connected to respective inputs of each of the multiple decoder instances 224. The loss simulator 226 is configured to drive these instances 224 of the decoder with output from the encoding block 220 but with different loss scenarios applied to different instances, e.g. with missing blocks or frames that would be lost in event of a particular packet loss or incorrigible data corruption error. Each instance 224 of the decoder in the encoder 206 is also arranged to receive a corresponding portion of the unencoded video, and is configured to compare the unencoded video with the decoded video having had the simulated loss applied, and to thereby determine an indication of loss effect or a concealment decision in the manner discussed above and output this for transmission as side information. The output of the encoding block 220 and the outputs of the multiple decoder instances 224 are coupled to inputs of a multiplexer 222 which is configured to interleave the side information generated as a result of the comparisons performed by the decoder instances 224.

In a preferred implementation, in a case where the encoder 206 is arranged for execution on a processor having an architecture which supports parallel execution, each of the decoder instances 224 may be implemented on a separate respective parallel execution unit of the processor.

Note also the instance or instances 224 of the decoder implemented in the encoder 206 for the purpose of simulating loss effects need not necessarily be exact replicas of the actual decoder 108 at the decoder side. In alternative embodiments, lower complexity approximations of the decoder 108 may be used in the duplicate instance(s) 224 so as to reduce the processing burden incurred by the encoder 206. Furthermore, note that there may also be another, lossless encoding stage involved, such as an entropy encoder, not shown in Figure 2c. E.g. the entropy encoder may be placed between the first encoding module 220 and the multiplexer 222, or after the multiplexer 22. However, where reference is made to encoding and decoding for the purpose of estimating loss effect, this preferably does not include entropy encoding and decoding or such like. The instances 224 of the decoder preferably do not include entropy decoding or such like.

Returning to the general diagram of Figure 2b, another technique that may alternatively or additionally be used by the encoder-side estimation module 207 is to derive a matrix linking coding parameters to possible efficacy of concealment. Some examples of such parameters that may be measured by the encoder-side estimation module 207 are as follows.
a) Motion vectors: the more motion is happening in the current frame, the more sensitive future frames will be to having lost the current one, and therefore the less effective the concealment algorithm would be.
b) In the case where a frame is divided into subdivisions such as macroblocks, it is possible to compute the difference (i.e. residual) between one or more parameters of a current macroblock and a previous corresponding macroblock (or even more into the past). This would give an idea how different the previous image data is from the current data, and thus how much information would be lost by trying to continue decoding without it. The greater the difference, the less effective the concealment algorithm will be.
c) Any general difference between current and previous image data. Again this gives an estimate of importance of the current image data (a bigger difference means bigger importance and therefore less effective concealment).
d) A measure of difference between macroblocks of different frames, but only taking into account macroblocks used in motion estimation. The more they were changed from frame to frame, the more important those frames are and the less likely concealment is to be effective.

In the case of option (a), a measure of the amount of motion in a frame (e.g. in terms of the magnitude, position and/or number of one or more motion vectors) may be used as a measure of loss effect and compared to a threshold to determine whether the concealment algorithm would be worthwhile. In case of options (b) to (d), the difference value is used. The more motion or the bigger the difference, the less effective the concealment algorithm is likely to be compared with simply freezing the preceding frame. Again, the encoder 206 may signal the coding parameters or difference values to the controller 107 to compare to a threshold, or more preferably the encoder-side estimation module 207 may make the threshold decision at the encoding end and signal the decision to the receive-side controller 107.

The next most effective place to locate the estimation module is right after the encoder 206, shown by component 205 in Figure 2b. For example, consider a platform such as a camera incorporating a hardware encoder, where only the encoded signal is available. Some hints as to potential loss effect still can be derived. Some examples of such hints that may be measured in the encoder-side estimation module 205 without requiring entropy decoding are as follows.
e) Relative size of the frame (amount of data in terms of number of bits or bytes, etc.). The more data required to encode the frame (relative to others in the encoded stream), the more important it is likely to be, and therefore the less likely the concealment algorithm is to be effective.
f) Q parameter. If this is just decreasing for a frame, this likely means that the frame is just refining the quality and not much movement is happening. Whereas if it increased, something dramatic happened which makes a particular frame more important (and therefore concealment less effective).
g) If a particular platform has enough CPU power and memory to partially decode the encoded video, the encoder-side estimation module 207 could generate more intelligent estimates on motion/residual ratios, e.g. even determining the position and size of motion vectors. Again one option would be to run multiple decoder instances in parallel, e.g. on multiple cores.

Again, the encoder 206 may signal these parameters or difference values to the controller 107 to compare to a threshold, or more preferably the encoder-side estimation module 205 may make the threshold decision at the encoding end and signal the decision to the receive-side controller 107.

Any or all of options (a) to (g) can be used together to give an overall measure of loss effect.

An alternative place to locate an estimation module is right before the decoder 108 on the decode side, shown by component 109 in Figure 2a as part of the controller 209. The problem here is that the frame or packet is already lost and hence there is no way to look deeper inside. However, a total size of the lost data (i.e. the amount of data lost in terms of a number of bits or bytes, etc), and/or the number of frames lost, may still be available from information in the transporting protocol or may still be estimated. Thus the decoder-side estimation module 109 can still determine an estimate of loss effect based on the amount of lost data, and based on this can decide whether continuing to decode subsequent frames is likely to give effective concealment or not. The more data lost, the less likely concealment is to be effective.

Another possible location for an estimation module is inside the decoder 208 itself, shown by component 111 in Figure 2a. In one such example, the decoder-side estimation module 111 can look into which frames a particular macroblock is referencing, i.e. which frame it is encoded relative to (in a multiple reference scenario which is becoming more and more popular). Thus it could be that only a few macroblocks in the current frame are encoded relative to reference frames which are lost, and it would then still be possible to decode the current frame with relatively little impact on the current frame.

It will be appreciated that the above embodiments been described only by way of example.

For instance, none of the options for measuring loss effect described above are exclusive of one another, and any or all of these options can be used together to give an overall measure of loss effect. Further, the invention is not limited to these options and other measures of loss effect can be used as long as they reflect a perceived efficacy of concealment. The thresholds or other conditions used to select whether to conceal or freeze are not fixed and may vary depending on a particular system design or application.

Each of the receive buffer 106 and playout buffer 110 may be implemented as a region of a general purpose memory unit or as a dedicated register. Each of the decoder 108 (including concealment module), controller 107, encoder 206 and estimation modules 109, 111, 205 and 207 is preferably implemented in software stored on a storage medium such as a flash memory or hard drive and arranged for execution on a processor. However, the option of one or more of these components being implemented wholly or partially in dedicated hardware is not excluded.

The encoder 206 and decoder 108 may be implemented according to ISO standard H.264, but are not limited to such implementations and other suitable decoders will be known to a person skilled in the art. Similarly, the invention is not limited to any particular concealment algorithm, and various suitable examples will be known to a person skilled in the art.

Whilst the above may have been described in relation to frames or macroblocks of a frame, these terms are not intended to limit the applicability of the present invention. More generally, the portion of image data in question may be a frame or a subdivision within a frame, and the subdivision may be a slice, macroblock or block, or any other division or subdivision of a video signal.

The terms "interpolate" and "extrapolate" are not intended to limit to any specific mathematical operation, but generally can refer to any technique for regenerating lost data by approximating from other spatially and/or temporally nearby image data (as opposed to just freezing past data).

Further, "lost" need not necessarily mean completely absent, but could instead mean that only some of the data of a frame, macroblock, block or other image portion is lost; and/or that the image data in question is corrupted rather than absent.

Other variants may be apparent to a person skilled in the art given the disclosure herein. The invention is not limited by the described embodiments, but only by the appendant claims.

## Claims

1. A system comprising:
a receiver (104) for receiving from an encoder a video signal comprising encoded video data and a transport protocol over a lossy medium; and
a decoder (108) coupled to the receiver and arranged to decode the video signal for output to a display, the decoder including a concealment module for regenerating a portion of image data lost from the video signal over said medium, by interpolating or extrapolating from other image data of the video signal received over said medium;
wherein the decoder comprises a controller (107) configured to operate in one of a first mode and a second mode and select, based on a measure of loss effect estimated for said portion of image data, whether (i) to operate in the first mode whereby the concealment module is applied to regenerate said portion of image data, or alternatively (ii) to operate in the second mode;
**characterized in that**:
in the second mode, the controller freezes preceding image data of the video signal in place of said portion of image data; and
the decoder is configured to receive the measure of loss effect from the encoder, and to use the measure of loss effect received from the encoder to make said selection.

2. The system of claim 1, comprising: an encoder (206) arranged to encode the video signal; a transmitter (204) arranged to transmit the video signal to the receiver over said medium; and an encoder-side estimation module (205, 207) configured to estimate said measure of loss effect based on knowledge of said portion of image data before transmission and loss over said medium; wherein the encoder is configured to signal the loss effect to the decoder for use by the controller in making said selection.

3. The system of claim 1, where the encoder is configured to determine, based on the measure of loss effect, a concealment decision as to whether to apply the concealment module, and to signal the concealment decision to the decoder for use by the controller in making said selection.

4. The system of claim 1, 2, or 3, wherein the encoder-side estimation module is configured to estimate the measure of loss effect based on an unencoded version of said portion of image data.

5. The system of claim 4, wherein the encoder-side estimation module comprises a parallel instance (224) of the decoder, and is configured to estimate said measure of loss effect by comparing an unencoded version of said portion of image data with a simulated regeneration of said portion of image data by an instance of the concealment module.

6. The system of claim 5, wherein the encoder-side estimation module comprises multiple parallel instances of the decoder arranged for execution on different respective parallel execution units of a processor, each configured to estimate said measure of loss effect by comparing a respective unencoded portion of image data with a simulated regeneration of that portion by a respective instance of the concealment module.

7. The system of claim 4, wherein the encoder-side estimation module is configured to estimate said measure of loss effect based on a difference between an unencoded version of said portion of image data and preceding unencoded image data of the video signal.

8. The system of claim 1, 2 or 3, wherein the encoder-side estimation module is configured to estimate said measure of loss effect based on coding parameters used to encode said portion of image data.

9. The system of claim 1, 2 or 3, wherein the encoder-side estimation module is configured to estimate said measure of loss effect based on an encoded version of said portion of image data, after encoding but before transmission.

10. The system of claim 9, wherein the encoder-side estimation module is configured to estimate said measure of loss effect based on one of: a size of the portion of image data, a Q parameter of the portion of image data, a ratio of an amount of motion estimation data to residual data in the portion of image data, a position of motion vectors in the portion of image data, and a size of motion vectors in the portion of image data.

11. A method comprising:
receiving from an encoder a video signal comprising encoded video data and a transport protocol over a lossy medium;
using a decoder (108) to decode the video signal for output to a display (112), the decoder including a concealment module for regenerating a portion of image data lost from the video signal over said medium, by interpolating or extrapolating from other image data of the video signal received over said medium;
wherein the decoding comprises operating in one of a first mode and second mode, and selecting, based on a measure of loss effect estimated for said portion of image data, whether (i) to operate in the first mode whereby the concealment module is applied to regenerate said portion of image data, or alternatively (ii) to operate in the second mode;
the method **characterised in that**:
the second mode comprises freezing preceding image data of the video signal in place of said portion of image data; and
the decoder receives the measure of loss effect from the encoder, and uses the measure of loss effect received from the encoder to make said selection.

12. A computer program product comprising code embodied on a non-transient computer-readable medium and configured so as when executed on a processing apparatus to perform operations in accordance with the method of claim 11.

## Patentansprüche

1. System, das Folgendes umfasst:
einen Empfänger (104), um von einem Codierer ein Videosignal zu empfangen, das codierte Videodaten und ein Transportprotokoll über ein verlustbehaftetes Medium aufweist; und
einen Decodierer (108), der mit dem Empfänger gekoppelt und angeordnet ist, das Videosignal für Ausgabe an ein Display zu decodieren, wobei der Decodierer ein Verschleierungsmodul enthält, um einen Teil der Bilddaten, die über das Medium aus dem Videosignal verloren gegangen sind, durch Interpolieren oder Extrapolieren von anderen Bilddaten des über das Medium empfangenen Videosignals zu regenerieren;
wobei der Decodierer einen Controller (107) aufweist, der dazu ausgelegt ist, entweder in einem ersten Modus oder einem zweiten Modus zu arbeiten und basierend auf einem Maß an Verlusteffekt, das für den Teil der Bilddaten abgeschätzt wird, auszuwählen, ob (i) im ersten Modus zu arbeiten ist, wodurch das Verschleierungsmodul angewandt wird, um den Teil der Bilddaten zu regenerieren, oder alternativ (ii) im zweiten Modus zu arbeiten ist;
**dadurch gekennzeichnet, dass**:
im zweiten Modus der Controller vorhergehende Bilddaten des Videosignals anstelle des Teils der Bilddaten einfriert; und
der Decodierer dazu ausgebildet ist, das Maß an Verlusteffekt vom Codierer zu empfangen, und das vom Codierer empfangene Maß an Verlusteffekt zu nutzen, um die Auswahl zu treffen.

2. System nach Anspruch 1, das Folgendes umfasst: einen Codierer (206), der angeordnet ist, das Videosignal zu codieren; einen Sender (204), der angeordnet ist, das Videosignal über das Medium zum Empfänger zu übertragen; und ein codiererseitiges Schätzungsmodul (205, 207), das dazu ausgebildet ist, das Maß an Verlusteffekt basierend auf der Kenntnis des Teils der Bilddaten vor der Übertragung und dem Verlust über das Medium abzuschätzen; wobei der Codierer dazu ausgebildet ist, den Verlusteffekt dem Decodierer zu signalisieren, um den Controller beim Treffen der Wahl zu unterstützen.

3. System nach Anspruch 1, in dem der Codierer dazu ausgebildet ist, anhand des Maßes an Verlusteffekt eine Verschleierungsentscheidung zu treffen, ob das Verschleierungsmodul anzuwenden ist und dem Decodierer die Verschleierungsentscheidung zu signalisieren, um den Controller beim Treffen der Wahl zu unterstützen.

4. System nach Anspruch 1, 2 oder 3, wobei das codiererseitige Schätzungsmodul dazu ausgebildet ist, das Maß an Verlusteffekt anhand einer nicht codierten Version des Teils der Bilddaten abzuschätzen.

5. System nach Anspruch 4, wobei das codiererseitige Schätzungsmodul eine parallele Instanz (224) des Decodierers aufweist und dazu ausgebildet ist, das Maß an Verlusteffekt durch Vergleichen einer nicht codierten Version des Teils der Bilddaten mit einer simulierten Regeneration des Teils der Bilddaten durch eine Instanz des Verschleierungsmoduls abzuschätzen.

6. System nach Anspruch 5, wobei das codiererseitige Schätzungsmodul mehrere parallele Instanzen des Decodierers aufweist, die für Ausführung auf unterschiedlichen jeweils parallelen Ausführungseinheiten eines Prozessors angeordnet und dazu ausgebildet sind, das Maß an Verlusteffekt durch Vergleichen eines entsprechenden nicht codierten Teils der Bilddaten mit einer simulierten Regeneration des Teils durch eine entsprechende Instanz des Verschleierungsmoduls abzuschätzen.

7. System nach Anspruch 4, wobei das codiererseitige Schätzungsmodul dazu ausgebildet ist, das Maß an Verlusteffekt anhand einer Differenz zwischen einer nicht codierten Version des Teils der Bilddaten und den vorhergehenden nicht codierten Bilddaten des Videosignals abzuschätzen.

8. System nach Anspruch 1, 2 oder 3, wobei das codiererseitige Schätzungsmodul dazu ausgebildet ist, das Maß an Verlusteffekt anhand von Codierungsparametern abzuschätzen, die zum Codieren des Teils der Bilddaten verwendet werden.

9. System nach Anspruch 1, 2 oder 3, wobei das codiererseitige Schätzungsmodul dazu ausgebildet ist, das Maß an Verlusteffekt anhand einer codierten Version des Teils der Bilddaten nach der Codierung, aber vor der Übertragung abzuschätzen.

10. System nach Anspruch 9, wobei das codiererseitige Schätzungsmodul dazu ausgebildet ist, das Maß an Verlusteffekt anhand folgender Elemente abzuschätzen: einer Größe des Teils der Bilddaten, eines Q-Parameters des Teils der Bilddaten, eines Verhältnisses eines Betrags an Bewegungsschätzungsdaten zu Restdaten in dem Teil der Bilddaten, einer Position von Bewegungsvektoren in dem Teil der Bilddaten, und einer Größe von Bewegungsvektoren in dem Teil der Bilddaten.

11. Verfahren, das Folgendes umfasst:
Empfangen eines Videosignals von einem Codierer, das codierte Videodaten und ein Transportprotokoll über ein verlustbehaftetes Medium aufweist;
Verwenden eines Decodierers (108), um das Videosignal für Ausgabe an ein Display (112) zu decodieren, wobei der Decodierer ein Verschleierungsmodul enthält, um einen Teil der Bilddaten, die über das Medium aus dem Videosignal verloren gegangen sind, durch Interpolieren oder Extrapolieren von anderen Bilddaten des über das Medium empfangenen Videosignals zu regenerieren;
wobei das Decodieren den Betrieb entweder in einem ersten Modus oder einem zweiten Modus umfasst, und basierend auf einem Maß an Verlusteffekt, das für den Teil der Bilddaten abgeschätzt wird, auszuwählen, ob (i) im ersten Modus zu arbeiten ist, wodurch das Verschleierungsmodul angewandt wird, um den Teil der Bilddaten zu regenerieren, oder alternativ (ii) im zweiten Modus zu arbeiten ist;
wobei das Verfahren **dadurch gekennzeichnet ist, dass**:
der zweite Modus das Einfrieren der vorhergehenden Bilddaten des Videosignals anstelle des Teils der Bilddaten umfasst; und
der Decodierer das Maß an Verlusteffekt vom Codierer empfängt und das vom Codierer empfangene Maß an Verlusteffekt zu nutzen, um die Auswahl zu treffen.

12. Computerprogrammprodukt, das Code umfasst, der auf einem nichtflüchtigen computerlesbaren Medium enthalten und dazu ausgebildet ist, bei Ausführung auf einem Verarbeitungsgerät Operationen im Einklang mit dem Verfahren nach Anspruch 11 durchzuführen.

## Revendications

1. Système comprenant :
un récepteur (104) pour recevoir, d'un codeur, un signal vidéo comprenant des données vidéo codées et un protocole de transport sur un support avec perte ; et
un décodeur (108) couplé au récepteur et conçu pour décoder le signal vidéo pour une transmission à un dispositif d'affichage, le décodeur comprenant un module de dissimulation pour régénérer une partie des données d'image perdues du signal vidéo sur ledit support, par interpolation ou par extrapolation à partir d'autres données d'image du signal vidéo reçu sur ledit support ;
dans lequel le décodeur comprend un dispositif de commande (107) configuré pour fonctionner soit dans un premier mode, soit dans un second mode et pour sélectionner, en se basant sur une mesure d'effet de perte estimée pour ladite partie de données d'image, (i) de fonctionner dans le premier mode, grâce à quoi le module de dissimulation est appliqué pour régénérer ladite partie de données d'image, ou, en variante, (ii) de fonctionner dans le second mode ;
**caractérisé en ce que** :
dans le second mode, le dispositif de commande bloque des précédentes données d'image du signal vidéo à la place de ladite partie de données d'image ; et
le décodeur est configuré pour recevoir la mesure d'effet de perte reçu du codeur pour réaliser ladite sélection.

2. Système selon la revendication 1, comprenant : un codeur (206) conçu pour coder le signal vidéo ; un émetteur (204) conçu pour transmettre le signal vidéo au récepteur sur ledit support ; et un module d'estimation côté codeur (205, 207) configuré pour estimer ladite mesure d'effet de perte en se basant sur la connaissance de ladite partie de données d'image avant une transmission et une perte sur ledit support ; dans lequel le codeur est configuré pour signaler l'effet de perte au décodeur destiné à être utilisé par le dispositif de commande lors de la réalisation de ladite sélection.

3. Système selon la revendication 1, où le codeur est configuré pour déterminer, en se basant sur la mesure d'effet de perte, une décision de dissimulation quant à savoir s'il faut appliquer le module de dissimulation et pour signaler la décision de dissimulation au décodeur destiné à être utilisé par le dispositif de commande lors de la réalisation de ladite sélection.

4. Système selon la revendication 1, 2 ou 3, dans lequel le module d'estimation côté codeur est configuré pour estimer la mesure d'effet de perte en se basant sur une version codée de ladite partie de données d'image.

5. Système selon la revendication 4, dans lequel le module d'estimation côté codeur comprend une instance parallèle (224) du décodeur et est configuré pour estimer ladite mesure d'effet de perte en comparant une version non codée de ladite partie de données d'image avec une régénération simulée de ladite partie de données d'image au moyen d'une instance du module de dissimulation.

6. Système selon la revendication 5, dans lequel le module d'estimation côté codeur comprend de multiples instances parallèles du décodeur conçues pour une exécution sur différentes unités d'exécution parallèles respectives d'un processeur, chacune étant configurée pour estimer ladite mesure d'effet de perte en comparant une partie non codée respective desdites données d'image avec une régénération simulée de cette partie au moyen d'une instance respective du module de dissimulation.

7. Système selon la revendication 4, dans lequel le module d'estimation côté codeur est configuré pour estimer ladite mesure d'effet de perte en se basant sur une différence entre une version non codée de ladite partie de données d'image et des précédentes données d'image non codées du signal vidéo.

8. Système selon la revendication 1, 2 ou 3, dans lequel le module d'estimation côté codeur est configuré pour estimer ladite mesure d'effet de perte en se basant sur des paramètres de codage utilisés pour coder ladite partie de données d'image.

9. Système selon la revendication 1, 2 ou 3, dans lequel le module d'estimation côté codeur est configuré pour estimer ladite mesure d'effet de perte en se basant sur une version codée de ladite partie de données d'image après un codage mais avant une transmission.

10. Système selon la revendication 9, dans lequel le module d'estimation côté codeur est configuré pour estimer ladite mesure d'effet de perte en se basant : soit sur une taille de la partie de données d'image, soit sur un paramètre Q de la partie de données d'image, soit sur un rapport entre une quantité de données d'estimation de mouvement et des données résiduelles dans la partie de données d'image, soit sur une position de vecteurs de mouvement dans la partie de données d'image, soit sur une talle de vecteurs de mouvement dans la partie de données d'image.

11. Procédé consistant :
à recevoir, d'un codeur, un signal vidéo comprenant des données vidéo codées et un protocole de transport sur un support avec perte ;
à utiliser un décodeur (108) pour décoder le signal vidéo pour une transmission à un dispositif d'affichage (112), le décodeur comprenant un module de dissimulation pour régénérer une partie des données d'image perdues du signal vidéo sur ledit support, par interpolation ou par extrapolation à partir d'autres données d'image du signal vidéo reçu sur ledit support ;
dans lequel le décodage consiste à fonctionner soit dans un premier mode, soit dans un second mode et à sélectionner, en se basant sur une mesure d'effet de perte estimée pour ladite partie de données d'image, (i) de fonctionner dans le premier mode, grâce à quoi le module de dissimulation est appliqué pour régénérer ladite partie de données d'image, ou, en variante, (ii) de fonctionner dans le second mode ;
le procédé étant **caractérisé en ce que** :
le second mode consiste à bloquer des précédentes données d'image du signal vidéo à la place de ladite partie de données d'image ; et
le décodeur reçoit la mesure d'effet de perte en provenance du codeur et utilise la mesure d'effet de perte reçue du codeur pour réaliser ladite sélection.

12. Produit-programme d'ordinateur comprenant un code intégré sur un support non transitoire lisible par ordinateur et configuré de sorte, lorsqu'il est exécuté sur un appareil de traitement, à effectuer des opérations selon le procédé de la revendication 11.
